# EUROPÄISCHE PATENTSCHRIFT

(11) **EP 0 599 040 B1**
(45) Veröffentlichungstag und Bekanntmachung des Hinweises auf die Patenterteilung: **09.08.1995**
(21) Anmeldenummer: 93116587.2
(22) Anmeldetag: 14.10.1993
(51) Int. Cl.: A01G 9/14, A01G 9/24

(54) **Mobiltisch für Pflanzenzuchtbetriebe**
Mobile table for plant nurseries
Table mobile pour pépinières

(30) Priorität: 14.11.1992 DE 9215511 U; 04.12.1992 DE 9216544 U
(43) Veröffentlichungstag der Anmeldung: 01.06.1994
(73) Patentinhaber: QTRAY LTD., Gibraltar (GI)
(72) Erfinder: Caroe, Claus J., Tilmanstone, Deal, Kent CT14 OJ (GB)
(74) Vertreter: Habbel, Hans-Georg, Dipl.-Ing.

(56) Entgegenhaltungen:
- DE-A- 3 737 300
- DE-A- 3 814 203
- DE-A- 4 022 039
- GB-A- 2 077 082

## Beschreibung

Die Erfindung betrifft einen Mobiltisch für Pflanzenzuchtbetriebe mit einem viereckigen Grundrahmen gemäß dem Oberbegriff des Hauptanspruches.

Derartige Mobiltische sind vielfach bekannt. Sie sind insgesamt auf Untergestellen verfahrbar, so daß die in den Mobiltischen enthaltenen Pflanzen in einem Gewächshaus unter optimaler Platzausnutzung angeordnet werden können und zur Behandlung zu einer zentralen Behandlungsstelle verfahren werden können.

Aus der DE-A-40 22 039 ist ein Pflanztisch bekanntgeworden, bei welchem die Pflanzrinnen auf Querleisten aufstehen, die als Winkelprofile ausgebildet sind, wobei die Pflanzrinnen auf der Oberkante der vertikalen Schenkel aufruhen und die horizontalen Schenkel als Laufflächen für Transportwagen dienen können, wobei diese Laufflächen niedriger angeordnet sind als die Unterstützungsflächen für die Pflanzrinnen. Hierdurch ist ein Handhaben der Pflanzrinnen durch den Transportwagen möglich.

Der Erfindung liegt die Aufgabe zugrunde, den gattungsbildenden Stand der Technik dahingehend zu verbessern, daß die Handhabung des Transportwagens und die Wartung der Pflanzen gewährleistet bleibt.

Diese der Erfindung zugrundeliegende Aufgabe wird durch die Lehre des Hauptanspruches gelöst.

Wenn die Querleisten innerhalb des Mobiltisches als Winkelprofile ausgebildet sind, können diese aufgrund ihrer Steifigkeit mit ihrer Oberkante die Pflanzrinnen unterstützen und gleichzeitig mit ihren Flächen die Schienen für den fahrbaren Transportwagen ausbilden. Auf diese Weise ist ein kompakter, in der Herstellung preisgünstiger und sehr effizienter Mobiltisch herstellbar.

Der Grundrahmen weist an den beiden Stirnseiten der Schienen Aussparungen auf, so daß der fahrbare Transportwagen den Bereich des Mobiltisches verlassen kann. Auf diese Weise kann der fahrbare Transportwagen gemeinsam mit den Pflanzrinnen zu einer Behandlungsstelle verfahren werden und von dort in denselben oder einen anderen Mobiltisch wieder einfahren. Ein häufiges Umsetzen oder häufi - ges Aufnehmen der Pflanzrinnen wird dadurch vermieden, so daß bei der Handhabung der Pflanzrinnen eine große Zeitersparnis möglich ist und auf zusätzliche Handhabungsgeräte, wie Kräne od. dgl., verzichtet werden kann.

Die Mobiltische verfügen üblicherweise über Räder, mit denen sie auf den Untergestellen verfahren werden können. Dabei können vorteilhaft die Räder als Doppelräder ausgebildet werden, so daß beim Überbrücken von Lücken innerhalb der Schienen stets eine optimale Unterstützung des Mobiltisches gewährleistet wird.

Die Bewässerung der Pflanzen kann durch eine Hauptleitung erfolgen, von der eine Vielzahl von Abflüssen auf die Pflanzrinnen gerichtet ist. Wenn dabei der Abstand der Abflüsse geringfügig kleiner bemessen ist als es der Rinnenbreite entspricht, kann sichergestellt werden, daß stets eine ausreichende Flüssigkeitsmenge jeder Rinne zugeführt wird.

Anstelle einer Rücklaufleitung, die beispielsweise bei einer Fließbewässerung erforderlich ist, am Untergestell kann eine derartige Rücklaufeinrichtung in Form einer Leitung oder einer Rinne direkt am Mobiltisch angeordnet sein. Auf diese Weise sind Wasserverluste vermeidbar, da die Rücklaufleitung optimal an die Verhältnisse des Mobiltisches angepaßt werden kann.

Falls die Pflanzen über feststehende externe Wasserzuleitungen bewässert werden, kann an jedem Mobiltisch eine Wasserrinne vorgesehen sein, die sich in Fahrtrichtung über die gesamte Länge des Mobiltisches erstreckt. Auch bei unterschiedlichsten Stellungen des Mobiltisches ist daher stets ein sicheres Auffangen des Bewässerungswassers sichergestellt.

Ist demgegenüber die Stellung des Mobiltisches stets in engen Grenzen fest vorgegeben, kann anstelle der Wasserrinne ein Aufnahmetrichter vorgesehen sein, der dann bei Einnahme der vorgegebenen Stellung des Mobiltisches unterhalb des externen Wasserzulaufs angeordnet ist.

Ein Rolltisch kann über eine verfahrbare Düse für die Bewässerung verfügen, die innerhalb eines Mobilrahmens nacheinander die verschiedenen Pflanzrinnen mit Wasser beschickt. Auf diese Weise kann die Zahl der verwendeten Wasserausflüsse erheblich reduziert werden, so daß die Kontrolle der Ausflüsse erheblich vereinfacht wird. Dabei kann der Düse ein Sensor zugeordnet sein, der erkennt, ob sich die Düse über einer Pflanzrinne befindet. In diesem Fall wird eine Wassermenge, die fest vorgegeben sein kann, an die Pflanzrinne abgegeben.

Die Erfindung wird anhand der Zeichnungen im folgenden näher erläutert. Dabei zeigt
- Fig. 1: schematisch ein erstes Ausführungsbeispiel Typ A eines neuerungsgemäßen Mobiltisches,
- Fig. 2: ein zweites Ausführungsbei spiel Typ B, die
- Fig. 3 und 4: verschiedene Bewässerungsmöglichkeiten beim Typ A, die
- Fig. 5 und 6: verschiedene Bewässerungsmöglichkeiten beim Typ B, die
- Fig. 7 und 8: ein Ausführungsbeispiel einer sensorgesteuerten Bewässerungseinrichtung mit einem einzigen Ausfluß.

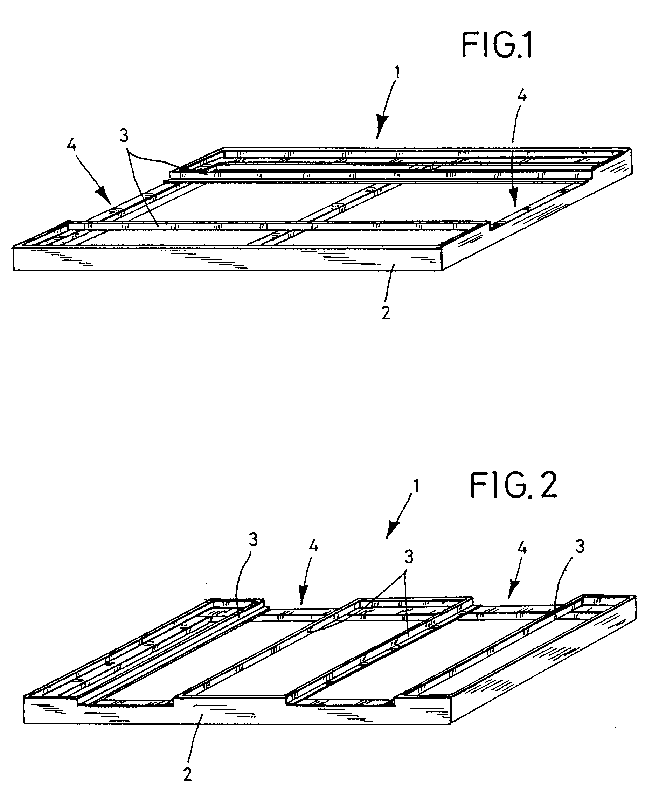

In Fig. 1 ist mit 1 ein Mobiltisch bezeichnet, der einen Grundrahmen 2 aufweist sowie zwei Querstreben 3. Die Querstreben 3 bestehen aus L-förmig ausgebildeten und zueinander gerichteten Winkelprofilen, die an ihrer Oberkante bündig mit der Oberkante des Grundrahmens 2 abschließen.

Zwischen den beiden Querstreben 3 sind in den entsprechenden Rahmenbereichen Aussparungen 4 vorgesehen, die von der Oberkante des Grundrahmens 2 bis zur unteren, horizontalen Fläche der Querstreben 3 reichen.

Bei Anordnung einer Vielzahl von Mobiltischen 1 hintereinander ergibt sich eine durchlaufende Schiene, die aus den Querstreben 3 gebildet wird. In diesen Schienen kann ein Transportwagen verfahren werden, der so flach ausgebildet ist, daß er die Höhe der Querstreben 3 nicht überschreitet.

Der dargestellte Mobiltisch 1 kann eine Vielzahl von Pflanzrinnen aufnehmen, die sich rechtwinklig zu den Querstreben 3 erstrecken und die von den Querstreben 3 und dem Grundrahmen 2 getragen werden.

In Fig. 2 ist ein Ausführungsbeispiel eines Mobiltisches 1 dargestellt. Dieser Typ B eines Mobiltisches 1 kann gegenüber dem in Fig. 1 dargestellten Typ A zwei Pflanzrinnen 5 in Längsrichtung hintereinander aufnehmen, wobei sich die Pflanzrinnen 5 auch hier quer zu den Querstreben 3 erstrecken.

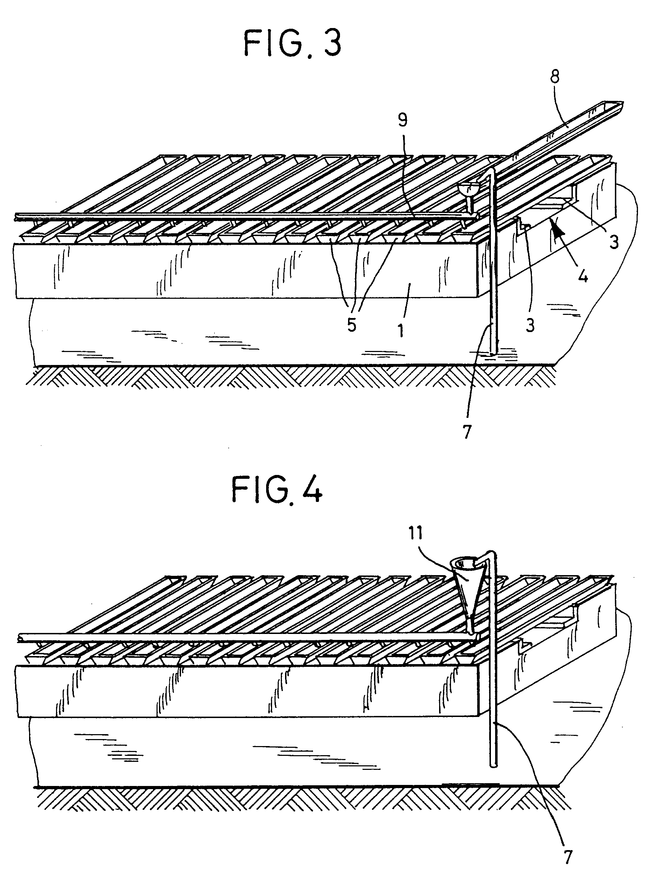

In Fig. 3 ist eine Anzahl von Mobiltischen des Typs A dargestellt, wobei der Mobiltisch 1 mit einer Vielzahl von Pflanzrinnen 5 besetzt ist. Zur Bewässerung der Pflanzen ist ein externer Wasserzulauf 7 vorhanden, der fest im Hallenboden verankert ist. Da der Mobiltisch verfahrbar ist, weist er an seiner Stirnseite eine Wasserrinne 8 auf, die sich in Fahrtrichtung des Mobiltisches 1 über dessen gesamte Länge, also über die gesamte Länge seiner Stirnseite, erstreckt. Unabhängig von der Stellung des Mobiltisches 1 ist daher eine sichere Wasseraufnahme aus dem Wasserzulauf 7 möglich.

Von der Wasserrinne 8 erfolgt die Bewässerung durch eine Hauptleitung 9 und eine Vielzahl von Abflüssen 10, aus denen das Wasser für die Bewässerung tropft oder strömt. Bei einer Breite der Pflanzrinnen 5 von beispielsweise 100 mm kann der Abstand der Abflüsse 10 beispielsweise 98 mm betragen, so daß in jedem Fall sichergestellt ist, daß unabhängig von der Positionierung einer Pflanzrinne 5 die Bewässerung dieser Pflanzrinne möglich ist.

Bei einer Fließbewässerung mit kontinuierlichem Wasserzulauf sind Bohrungen an der Bewässerung gegenüberliegenden Ende der Pflanzrinnen 5 vorgesehen, wobei diese Bohrungen knapp oberhalb des Bodens der Pflanzrinnen 5 angeordnet sind. Von hier strömt das überschüssige Wasser in einen Wasserrücklauf, der erneut der Bewässerung zugeführt werden kann.

Wird demgegenüber eine Dosierungsbewässerung vorgenommen, so können sich Bohrungen in den Pflanzrinnen in einem definierten Abstand oberhalb des Rinnenbodens befinden, so daß darunter eine gewisse maximal zulässige Wassermenge in der Pflanzrinne 5 gespeichert werden kann. Ein Rücklauf überschüssigen Wassers ist hier in der Regel nicht erforderlich.

In Fig. 4 ist ein Ausführungsbeispiel ähnlich der Fig. 3 dargestellt, wobei anstelle der Wasserrinne 8 ein Aufnahmetrichter 11 zur Aufnahme des Wassers aus dem externen Wasserzulauf 7 vorgesehen ist. Bei fest vorgegebener Positionierung der Mobiltische 1 ist die Anordnung eines derartigen Aufnahmetrichters 11 ausreichend, um die Bewässerung des Mobiltisches 1 sicherzustellen.

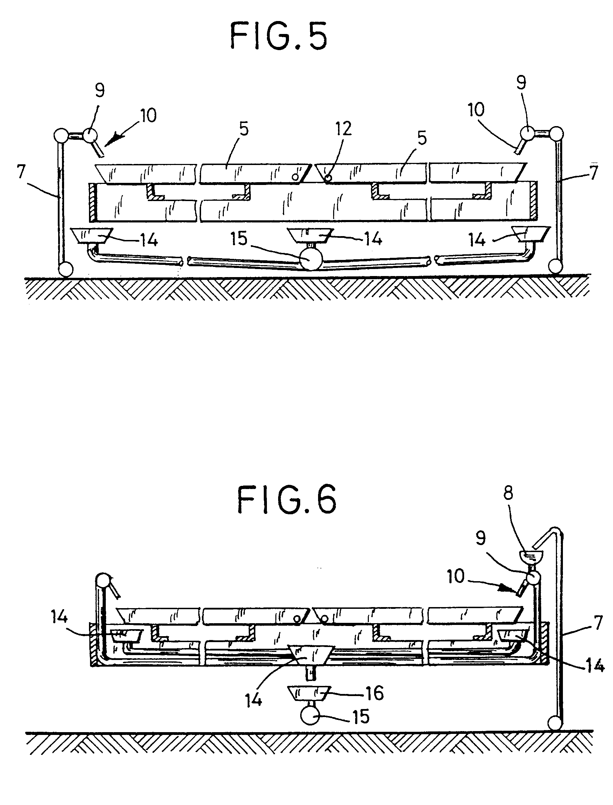

Fig. 5 zeigt schematisch die Bewässerung an einem Mobiltisch 1 vom Typ B. Hier sind zwei Pflanzrinnen 5 nebeneinander oder in ihrer Längsrichtung hintereinander angeordnet und für eine Fließbewässerung ausgelegt. An den beiden gegenüberliegenden Stirnseiten der beiden Pflanzrinnen 5 sind externe Wasserzuläufe 7 vorgesehen, von denen die Bewässerung in die Stirnseite der Pflanzrinnen 5 erfolgt. Durch Abflußlöcher 12 an den Pflanzrinnen 5 fließt überschüssiges Wasser aus den Pflanzrinnen aus und gelangt in eine Auffangwanne 14. Darüber hinaus fließt Wasser aus Abflüssen 10, unter denen keine Pflanzrinnen 5 angeordnet sind, ebenfalls in Auffangwannen 14, wobei alle Auffangwannen 14 in einen gemeinsamen Rücklauf 15 münden.

In Anlehnung des Ausführungsbeispieles aus Fig. 5 ist in Fig. 6 eine weitere Bewässerungsmöglichkeit für einen Mobiltisch vom Typ B dargestellt. Hier findet eine Wasserrinne 8 Anwendung, von der aus das Wasser in eine Hauptleitung 9 und in Abflüsse 10 gelangt. Die drei Auffangwannen 14, die bei Fig. 5 stationär dargestellt sind, befinden sich bei dem Ausführungsbeispiel in Fig. 6 im Mobiltisch 1 selbst und sind mit diesem verfahrbar. Von der mittleren Auffangwanne 14 erfolgt der Rückfluß des Wassers in eine Sammelwanne 16 und von dieser in den eigentlichen Rücklauf 15.

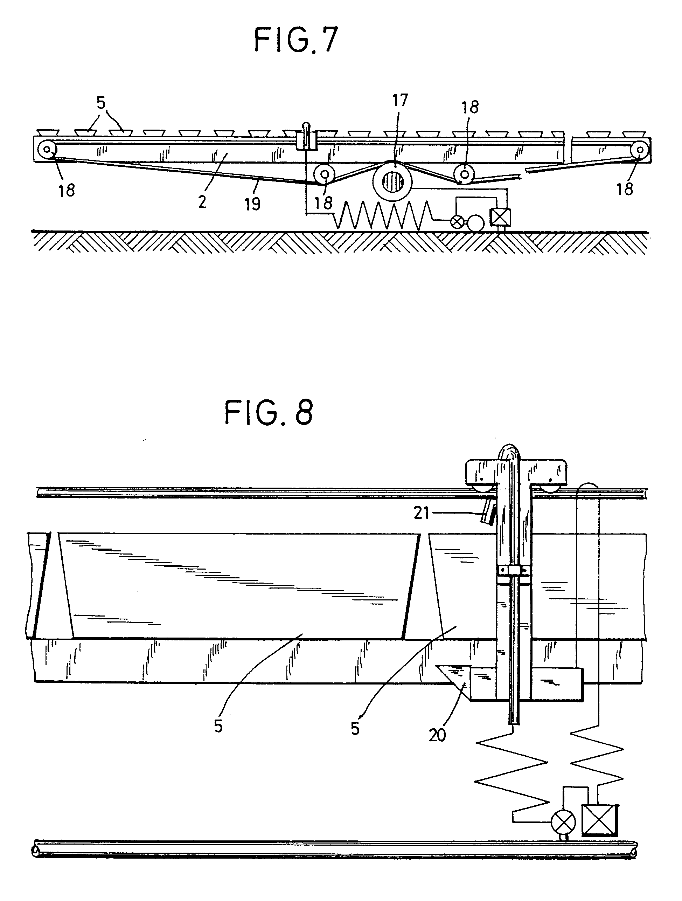

In Fig. 7 ist ein weiteres Bewässerungssystem dargestellt, bei dem am Grundrahmen 2 eines Mobiltisches 1 eine einzige Bewässerungszuleitung verfahrbar angeordnet ist, so daß diese nacheinander die verschiedenen Pflanzrinnen 5 bewässern kann. Über einen Stellmotor 17, Umlenkrollen 18 und mit Hilfe eines entsprechenden Antriebsriemens oder einer Antriebskette 19 kann die Bewässerungseinrichtung schrittweise über den Pflanzrinnen 5 positioniert werden.

In Fig. 8 ist der Bereich des eigentlichen Wasserzulaufs näher dargestellt. Ein Sensor 20 registriert die Position des Wasserzulaufs 21 und ermöglicht über eine entsprechende Steuerung die Zufuhr einer bestimmten vorprogrammierten Wassermenge in jede Pflanzrinne 5, wobei durch den Abstand zweier benachbarter Pflanzrinnen 5 erkannt wird, daß sich der Zulauf 21 über einer neuen, d. h. nächsten Pflanzrinne 5 befindet. Ebenso wird durch den Sensor 20 verhindert, daß bei besonders großen Abständen zwischen zwei Pflanzrinnen 5 Wasser ins Freie abgelassen und nicht in eine Pflanzrinne gegeben wird.

Gegenüber der Vielzahl von Abflüssen 10 aus den anderen Bewässerungsmöglichkeiten ist bei einer Bewässerung gemäß den Fig. 7 und 8 die Kontrolle einer korrekten Bewässerung sehr viel einfacher:

Es existiert nicht eine Vielzahl von Abflüssen 10, die der Summe aller Pflanzrinnen 5 mindestens entspricht, sondern vielmehr existiert eine Anzahl von Wasserzuläufen 21, die der Anzahl der insgesamt verwendeten Mobiltische 1 entspricht. Durch den im Grunde ständigen Betrieb des Wasserzulaufs 21 werden Verstopfungen dieses Zulaufs verhindert.

## Patentansprüche

1. Mobiltisch (1) für Pflanzenzuchtbetriebe mit einem viereckigen Grundrahmen (2), Querleisten (3) zur Unterstützung von Pflanzrinnen (5), wobei die Querleisten (3) als Winkelprofile ausgebildet sind und mit ihrer Oberkante Unterstützungsflächen für Pflanzrinnen (5) und mit ihrer unteren Fläche Schienen für den Transportwagen ausbilden und die Laufflächen für den Transportwagen niedriger angeordnet sind als die Unterstützungsflächen für die Pflanzrinnen (5), dadurch gekennzeichnet, daß die Querleisten an ihrer Oberkante bündig mit der Oberkante des Grundrahmens (2) abschließen und daß der Grundrahmen (2) an den Stirnseiten der Schienen Aussparungen (4) aufweist, die einen Freiraum zum Ein- oder Ausfahren des Transportwagens in bzw. aus dem Mobiltisch (1) schaffen.

2. Mobiltisch nach Anspruch 1, gekennzeichnet durch ein Bewässerungsrohr oder einen Bewässerungsschlauch, der sich oberhalb der Vielzahl von Pflanzrinnen (5) erstreckt, wobei diese Bewässerungshauptleitung (9) eine Vielzahl von Ausflüssen (10), z. B. in Form kleiner Schläuche aufweist, deren Abstand geringer ist als die Breite einer Pflanzrinne (5) beträgt.

3. Mobiltisch nach Anspruch 2, gekennzeichnet durch eine Rücklaufleitung oder Rücklaufrinne (15) für überschüssiges Wasser bei einer Fließbewässerung.

4. Mobiltisch nach einem der Ansprüche 2 bis 3, gekennzeichnet durch eine Wasserrinne (8) zur Aufnahme von Bewässerungswasser aus einem externen Zufluß (7), wobei sich die Wasserrinne (8) in Fahrtrichtung des Mobiltisches (1) über dessen gesamte Länge erstreckt.

5. Mobiltisch nach einem der Ansprüche 2 bis 3, gekennzeichnet durch einen Aufnahmetrichter (11) für Bewässerungswasser aus einem externen Zufluß (7), wobei der Aufnahmetrichter (11) mit einem Verteiler für das Wasser verbunden ist.

6. Mobiltisch nach einem der Ansprüche 1 bis 5, gekennzeichnet durch eine entlang der Stirnseiten der Pflanzrinnen (5) verfahrbare Wasserdüse (Wasserzulauf 21).

7. Mobiltisch nach Anspruch 6, gekennzeichnet durch einen Sensor (20), der auf die Pflanzrinnen (5) gerichtet ist und bei Anordnung der Wasserdüse (Wasserzulauf 21) oberhalb einer Pflanzrinne (5) eine Wasserabgabe aus der Wasserdüse in die Pflanzrinne (5) auslöst.

8. Mobiltisch nach Anspruch 6 oder 7, gekennzeichnet durch eine Steuerung zur Abgabe einer vorbestimmten Wassermenge aus der Wasserdüse (Wasserzulauf 21) in jede Pflanzrinne (5).

9. Tisch nach Anspruch 6 bis 8, gekennzeichnet durch den Einsatz bei Rolltischen.

## Claims

1. A mobile table (1) for plant-breeding businesses comprising a quadrangular base frame (2), transverse beams (3) for supporting plant troughs (5), the transverse beams (3) being constructed as angular members and forming with their upper edges support surfaces for plant troughs (5) and with their lower faces rails for the transportation truck and the running surfaces for the transportation truck being arranged lower than the support surfaces for the plant troughs (5), characterized in that the transverse beams end with their top edges flush with the upper edge of the base frame (2) and in that the base frame (2) comprises recesses (4) at the rail ends, which recesses (4) provide a free space for conveying the transportation truck in and out of the mobile table (1).

2. A mobile table according to claim 1, characterized by an irrigation pipe or an irrigation hose, which extends above the plurality of plant troughs (5), this main irrigation line (9) comprising a plurality of spouts (10), for example in the form of small hoses, the spacing of which is less than the width of one plant trough (5).

3. A mobile table according to claim 2, characterized by a return pipe or return duct (15) for excess water during continuous irrigation.

4. A mobile table according to either one of claims 2-3, characterized by a water duct (8) for receiving irrigation water from an external supply (7), the water duct (8) extending in the direction of travel of the mobile table (1) over the entire length thereof.

5. A mobile table according to either one of claims 2-3, characterized by a receiving funnel (11) for irrigation water from an external supply (7), the receiving funnel (11) being connected with a distributor for the water.

6. A mobile table according to any one of claims 1 to 5, characterized by a water nozzle (water inlet 21) displaceable along the ends of the plant troughs (5).

7. A mobile table according to claim 6, characterized by a sensor (20), which is directed towards the plant troughs (5) and, when the water nozzle (water inlet 21) is arranged above a plant trough (5), triggers water discharge from the water nozzle into the plant trough (5).

8. A mobile table according to claim 6 or claim 7, characterized by a control means for discharge of a predetermined water quantity from the water nozzle (water inlet 21) into each plant trough (5).

9. A table according to claim 6 to claim 8, characterized by use with roller tables.

## Revendications

1. Plateau mobile (1) pour cultures de végétaux, avec un cadre de base (2) carré, des bandeaux transversaux (3) destinés à soutenir des bacs de plantation (5), dans lequel les bandeaux transversaux (3) sont conçus comme des profils angulaires et forment avec leur surface inférieure des rails pour le chariot de transport, et les surfaces de roulement pour le chariot de transport sont disposées plus bas que les surfaces d'appui pour les bacs de plantation (5), caractérisé en ce que les bandeaux transversaux sont reliés de niveau sur leur arête supérieure avec l'arête supérieure du cadre de base (2) et en ce que le cadre de base (2) présente sur les faces des rails des évidements (4) qui créent un espace libre pour l'entrée du chariot de transport dans le plateau mobile (1) ou sa sortie de celui-ci.

2. Plateau mobile selon la revendication 1, caractérisé en ce qu'il comporte un tube d'irrigation ou un tuyau d'irrigation, qui s'étend au-dessus de la multiplicité de bacs de plantation (5), cette conduite principale d'irrigation (9) présentant une pluralité d'écoulements (10), prenant par exemple la forme de petits tuyaux, dont l'écartement est inférieur à la largeur d'un bac de plantation (5).

3. Plateau mobile selon la revendication 2, caractérisé en ce qu'il comporte une conduite de retour ou gouttière de retour (15) pour l'eau excédentaire dans une irrigation par eau courante.

4. Plateau mobile selon l'une ou l'ensemble des revendications 2 et 3, caractérisé en ce qu'il comporte une gouttière à eau (8) destinée à recevoir de l'eau d'irrigation provenant d'une arrivée externe (7), la gouttière à eau (8) s'étendant sur toute la longueur du plateau mobile (1) dans le sens de son déplacement.

5. Plateau mobile selon l'une ou l'ensemble des revendications 2 et 3, caractérisé en ce qu'il comporte un entonnoir de réception (11) pour l'eau d'irrigation provenant d'une arrivée externe (7), l'entonnoir de réception (11) étant relié à un dispositif de distribution de l'eau.

6. Plateau mobile selon l'une des revendications 1 à 5, caractérisé en ce qu'il comporte un gicleur à eau (arrivée d'eau 21) mobile le long des faces des bacs de plantation (5).

7. Plateau mobile selon la revendication 6, caractérisé en ce qu'il comporte un capteur (20), qui est orienté vers les bacs de plantation (5) et qui déclenche l'envoi d'eau par le gicleur à eau au bac de plantation (5) lorsque le gicleur à eau (arrivée d'eau 21) est disposé au-dessus d'un bac de plantation (5).

8. Plateau mobile selon la revendication 6 ou 7, caractérisé en ce qu'il comporte une commande pour la distribution d'une quantité d'eau prédéterminée par le gicleur à eau (arrivée d'eau 21) à chaque bac de plantation (5).

9. Plateau selon les revendications 6 à 8, caractérisé par son utilisation pour des plateaux roulants.
